# EUROPEAN PATENT APPLICATION

(11) **EP 0 521 809 A1**
(43) Date of publication of application: **07.01.1993**
(21) Application number: 92500068.9
(22) Date of filing: 05.06.1992
(51) Int. Cl.: A01G 13/10

(54) **Protector for fruit trees**

(71) Applicant: Villarrubia Ruiz, Jonas, E-28017 Madrid (ES)
(72) Inventor: Villarrubia Ruiz, Jonas, E-28017 Madrid (ES)
(74) Representative: Pons Arino, Angel

(57) **Abstract**

1. Protector for fruit trees 1, which has a complete or split ring form and adjusts and attaches to the tree trunk 4, and has a perimeter extension that forms a receptacle in which is placed the poisonous product that kills any parasite or animal that comes into contact with it, or uses it to propagate the poison against other animals that may be situated on the leaves of the tree; and above the receptacle is placed a type of overhang 7 in the form of a visor that covers the receptacle.

## Description

The present invention refers to a protector for fruit trees.

The protector invented has novelty in its manner of construction and its optimum results.

These two characteristics are achieved with the invented protector in a simple, easy and safe manner.

The adaptation of the protector to the three trunk is simple and it can also be removed for any cleaning operation.

Problems arising from any type of parasite and from ants that damage the leaves and fruit of trees, are well known, and it is true that to avoid this trees are usually fumigated, but this gives rise to costs in labour and products as well as tools for the distribution and application of the product.

These procedures must be applied in short periods of time and in very specific seasons, which implies that people are practically bound by this circumstance and must carry out fumigation by applying the product.

These circumstances constitute a very important problem and therefore the application of the invented protector is an optimum solution for these difficulties, giving very satisfactory results and, furthermore, without the need to enter into great expense.

According to the invention, the protector is formed by a belt or ring shaped portion that fits round the tree trunk and is so designed that once placed on the trunk it protects the tree from parasites and ants.

The belt, as a protection, is attached to the trunk by glue or by an appropriate system that allows the belt to be removed, and thus it can be fitted to a range of tree trunk diameters.

The protector has an extension along the perimeter that is "L" shaped and forms part of the belt, and in this is placed the poison appropriate for the parasite to be eliminated.

This extension has an "L" shaped section and forms a type of ring shaped receptacle that is covered by a sloped projection like a visor with a greater width which is placed above and protects the receptable, and for this reason it has a slope that allows rain or irrigation water to run off.

When the animal passes through the receptacle with the poison it is either killed by it or propagates its use against other animals that may be on the leaves, for example greenfly, eliminating them and, depending on the poison, in the case of ants these take it back to the anthill and pass on to their companions the poison adhering to their feet.

It is obvious that the poison is generic and will be applied according to the type of parasite to be exterminated.

Naturally the belt has either complete or partial veins that form part of the same and which are in contact with the tree trunk and have a triangular section to aid in tightening and holding the belt to the trunk.

In order to more easily understand not only the formation but also the actual use of the invented protector, reference is made below to a practical example, where this form is merely enunciative and in no case limits the same, all as shown in the attached drawings, in which:

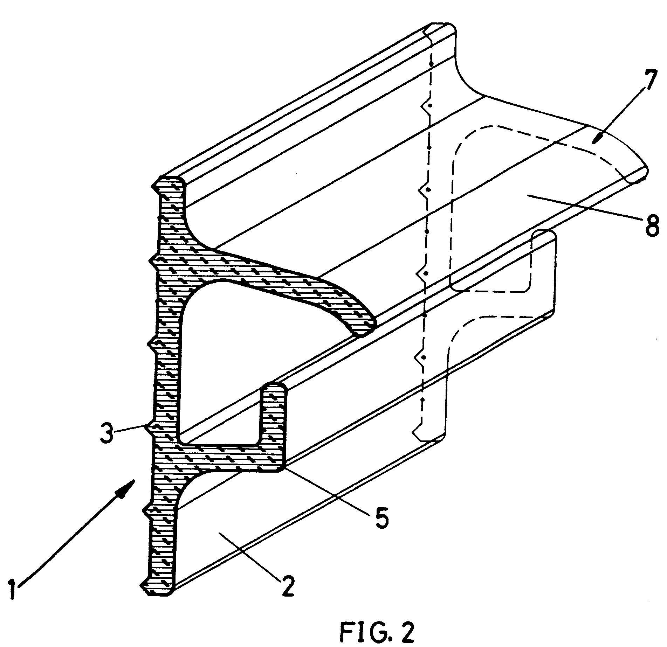

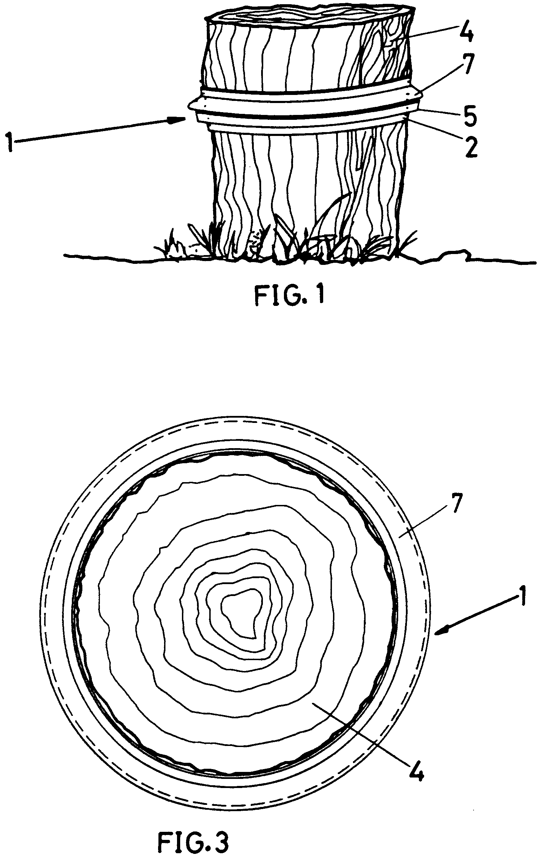

Figure 1 shows a perspective view of the placement of the protector on the tree trunk.

Figure 2 shows a perspective and sectional view of a piece of the protector.

Figure 3 shows a front view of Figure 1.

The protector 1 is made up of a belt 2 of appropriate material for use.

The belt 2 has veins 3 on the surface that comes into contact with the trunk, of triangular section, complete, continuous or discontinuous, that aid in the placing and retention of the protector round the tree trunk 4.

The belt 2 has an extension on the perimeter 5 with a generally "L" shaped section, that forms a receptacle 6 to hold the poison to exterminate the animals.

In order to protect the poison from rain or irrigation water, the product has an overhanging part 7 shaped like a visor with an inclined curved-convex surface 8 that overhangs the extension 5 that forms the receptacle.

Having sufficiently described the nature of the invention and the manner of putting it into practice, it must be noted that the above layouts indicated and represented in the attached drawings may be modified in detail, providing this does not alter the fundamental principle.

## Claims

1. Protector for fruit trees; characterized because it has a complete or cut ring shape that adjusts and attaches to a tree trunk, and has a perimeter extension that forms a receptacle in which the poisonous product is placed so that when it comes into contact with any parasite or animal the latter is killed or used as a propagator for the poison against other animals that may be situated on the leaves of the tree; and because above the receptacle is placed a type of overhang like a visor to cover the receptacle.

2. Protector according to claim 1, characterized because the surface in contact with the trunk has triangular section protruding nerves, either whole or split, that aid in retaining and holding the protector.

3. Protector according to claim 1, characterized because the receptacle has an "L" shaped section.
